# EUROPEAN PATENT APPLICATION

(11) **EP 4 365 692 A1**
(43) Date of publication of application: **08.05.2024**
(21) Application number: 22832562.7
(22) Date of filing: 31.03.2022
(51) Int. Cl.: G05B 23/02

(54) **CONTROL SYSTEM**

(30) Priority: 30.06.2021 JP 2021108844
(71) Applicant: OMRON Corporation, Kyoto 600-8530 (JP)
(72) Inventor: KAWAI, Naohiro, Kyoto-shi, Kyoto 600-8530 (JP); WATANABE, Tadashi, Kyoto-shi, Kyoto 600-8530 (JP)
(74) Representative: Mewburn Ellis LLP
(86) International application number: PCT/JP2022/016766
(87) International publication number: WO 2023/276401

(57) **Abstract**

A control system (1a) includes a control unit configured to control the control target, and an imaging unit having an imaging range where the control target can be imaged as a subject can be captured, the control unit transmits, upon detection of an event, an imaging start command (1) to the imaging unit, and causes a data collection unit (118a) to collect control data with the control data associated with a collection time, and the imaging unit starts imaging in accordance with the imaging start command (1) transferred from the control unit and causes an image collection unit (46) to collect a captured image with the captured image associated with an imaging time. The control system (1a) manages a time lag between the control data collected by the data collection unit (118a) and the image collected by the image collection unit (46).

## Description

### TECHNICAL FIELD

The present technology relates to a control system that controls a control target, and particularly relates to a control system that collects control data on control.

### BACKGROUND ART

In various production sites to which factory automation (FA) is applied, there is a need to increase a capacity utilization rate by means of predictive maintenance of a machine or a device as production equipment. The predictive maintenance means a maintenance technique to detect any abnormality occurring in a machine or a device and execute maintenance work such as maintenance or replacement before the equipment is brought into a state where the equipment needs to stop. In order to implement such predictive maintenance, a mechanism to support a user to determine whether or not any abnormality occurs in a machine or a device in operation using data collected from the machine or the device has been put into practical use.

For example, Japanese Patent Laying-Open No. 2012-99972 (PTL 1) discloses an image processing device that displays waveform data based on an output signal of an object and a moving image captured by a camera on the same screen.

### CITATION LIST

### PATENT LITERATURE

PTL 1: Japanese Patent Laying-Open No. 2012-99972

### SUMMARY OF INVENTION

### TECHNICAL PROBLEM

There is a time lag between when an imaging start command is transmitted to the camera and when the camera actually starts imaging by at least time required for transmitting the command. Therefore, in a case where the moving image is reproduced, the moving image is displayed with delay based on the lag relative to a waveform display time, so that it is not appropriate to use such display information as support information for the above-described predictive maintenance. Japanese Patent Laying-Open No. 2012-99972 (PTL 1) does not disclose a configuration where a time lag between the waveform data and the moving image captured by the camera.

It is therefore an object of the present disclosure to provide an environment capable of managing a time lag between control data on control of a control target and an image captured by an imaging unit.

### SOLUTION TO PROBLEM

A control system according to this disclosure includes: a control unit configured to control a control target; and an imaging unit having an imaging range where the control target can be imaged as a subject, in which the control unit includes a communication unit configured to transmit, upon detection of an event, an imaging start command to the imaging unit, and a data collection unit configured to collect control data on control with the control data associated with a collection time, the imaging unit includes an image collection unit configured to start imaging in accordance with the imaging start command transferred from the control unit and collect a captured image with the captured image associated with an imaging time, and the control system further includes a time management unit configured to manage time information indicating a time lag between the control data collected by the data collection unit and the image collected by the image collection unit.

With this disclosure, it is possible to manage the time lag between the control data collected with the control data associated with the collection time and the captured image that is a captured image of the control target and is associated with the imaging time.

According to the above disclosure, the time lag includes time from when the control unit transmits the imaging start command to the imaging unit to when the control unit receives a response to start of imaging from the imaging unit.

With this disclosure, it is possible to acquire the time lag as the time from the transmission of the imaging start command to the reception of the response.

According to the above disclosure, an information management unit is further included, the information management unit being configured to manage the control data collected by the data collection unit and associated with the collection time, the image collected by the image collection unit and associated with the imaging time, and the time information indicating the time lag with the control data, the image, and the time information associated with each other.

With this disclosure, it is possible to cause the information management unit to manage the control data associated with the collection time, the image associated with the imaging time, and the time information indicating the time lag between the control data and the image with the control data, the image, and the time information associated with each other.

According to the above disclosure, the control unit includes a first connector connected to a network to which the information management unit and the imaging unit belong, and communicates the imaging start command and the response with the imaging unit over the network.

With this disclosure, it is possible to acquire the time lag as the time from when the control unit transmits the imaging start command over the network to when the control unit receives the response over the network.

According to the above disclosure, the control unit communicates the imaging start command and the response with the imaging unit over a signal line.

With this disclosure, it is possible to acquire the time lag as the time from when the control unit transmits the imaging start command over the signal line to when the control unit receives the response over the signal line.

According to the above disclosure, the time lag is detected each time the event is detected.

With this disclosure, it is possible to acquire the time lag each time the event is detected. It is therefore possible to acquire, even if the time pertaining to the communication of the imaging start command and the response may fluctuate due to fluctuations in network load or processing load on the imaging unit, the time lag with consideration given to the load fluctuations.

According to the above disclosure, the collection time associated with the control data collected by the data collection unit includes a collection start time, the imaging time associated with the captured image collected by the image collection unit includes an imaging start time, and the time lag includes a time difference between the collection start time and the imaging start time.

With this disclosure, it is possible to acquire the time lag from the time difference between the collection start time of the control data and the imaging start time of the image.

According to the above disclosure, the event includes a predetermined event pertaining to control on the control target.

With this disclosure, it is possible to acquire the control data associated with the collection time, the image associated with the imaging time, and the time information indicating the time lag between the control data and the image each time the event pertaining to control.

According to the above disclosure, the control unit cyclically controls the control target, and the predetermined event includes detection of end of a predetermined cycle pertaining to control.

With this disclosure, it is possible to acquire the control data associated with the collection time, the image associated with the imaging time, and the time information indicating the time lag between the control data and the image each time the end of the predetermined cycle pertaining to control is detected.

According to the above disclosure, a user interface (UI) unit is further included, the control unit cyclically controls the control target, and the UI unit includes a waveform display unit configured to convert a plurality of pieces of the control data collected by the data collection unit into a waveform on a basis of the collection time associated with each of the plurality of pieces of control data, and display the waveform obtained as a result of the conversion, and an image reproduction unit configured to reproduce the image collected by the image collection unit in accordance with the imaging time associated with the image.

With this disclosure, it is possible to cause the UI unit to present, to the user, the control data as a waveform obtained by converting the control data on the basis of the associated collection time, and present, to the user, the collected image in accordance with the imaging time associated with the image.

According to the above disclosure, the image includes a moving image including a plurality of frame images each associated with the imaging time, and the UI unit includes an image adjustment unit configured to identify, on a basis of the collection time associated with the control data corresponding to a user-designated point on the waveform that has been displayed and the time lag, the frame image associated with the imaging time corresponding to the user-designated point from the plurality of frame images, and reproduce the frame image.

With this disclosure, it is possible to cause the UI unit to acquire, when the user designates a point on the waveform, the imaging time corresponding to the designated point from the collection time and the time lag at the designated point and reproduce the image associated with the collection time to present the image to the user.

According to the above disclosure, the imaging unit includes a plurality of imaging units having an imaging range where the control target can be imaged as a subject and having different imaging directions in which the control target is imaged, and the time management unit manages, for each of the plurality of imaging units, time information indicating the time lag between the control data collected by the data collection unit and the image collected by the image collection unit included in the imaging unit.

With this disclosure, it is possible for the control system to include the plurality of imaging units that capture the image of the control target from different imaging directions. In this case, for each imaging unit, it is possible to manage the time lag between the control data collected with the control data associated with the collection time and the captured image that is an image of the control target captured by the imaging unit and is associated with the imaging time.

According to the above disclosure, for each of the imaging units, the image adjustment unit identifies, on a basis of the collection time associated with the control data corresponding to the user-designated point and the time lag indicated by the time information of the imaging unit, the frame image associated with the imaging time corresponding to the user-designated point from the plurality of frame images configuring an image captured by the imaging unit, and reproduces the frame image.

With this disclosure, when the user designates a point on the waveform, the image adjustment unit identifies, for each imaging unit, the image associated with the imaging time corresponding to the designated point, that is, the imaging time with consideration given to the time lag from the plurality of frame images captured by the imaging unit, and reproduces the image.

According to the above disclosure, upon receipt of a user operation during reproduction by the image reproduction unit, the UI unit identifies a reproduction position in the plurality of frame images corresponding to a time point of the receipt, and stores information on a predetermined section starting from the identified reproduction position based on an amount of the user operation on the image with the information on the predetermined section associated with the image.

With this disclosure, it is possible to cause the UI unit to store, upon receipt of the user operation during image reproduction, information on frames corresponding to the predetermined section starting from the reproduction position identified on the basis of the received user operation with the information associated with the image.

According to the above disclosure, when reproducing the image, the image adjustment unit adjusts a reproduction speed of the image on a basis of the information on the predetermined section associated with the image.

With this disclosure, when reproducing the image, the image adjustment unit adjusts a reproduction speed of frames corresponding to the predetermined section designated by the user of the image on the basis of the information on the predetermined section, and reproduces the frames.

### ADVANTAGEOUS EFFECTS OF INVENTION

With the present disclosure, it is possible to collect the control data associated with the collection time, collect the captured image that is a captured image of the control target and is associated with the imaging time, and manage the time lag between the collected control data and the captured image.

### BRIEF DESCRIPTION OF DRAWINGS

Fig. 1 is a diagram schematically illustrating an overall configuration of a control system 1a according to the present embodiment.
Fig. 2 is a diagram schematically illustrating an overall configuration of a control system 1b according to the present embodiment.
Fig. 3 is a block diagram illustrating an example of a hardware configuration of a PLC 100 according to the present embodiment.
Fig. 4 is a block diagram illustrating an example of a hardware configuration of a server 200 according to the present embodiment.
Fig. 5 is a diagram schematically illustrating a DB manager provided through execution of a DB management program 211 illustrated in Fig. 4.
Fig. 6 is a block diagram illustrating an example of a hardware configuration of a terminal 300 according to the present embodiment.
Fig. 7 is a diagram schematically illustrating an example of a configuration of an imaging device 40 according to the present embodiment.
Fig. 8 is a diagram illustrating an example of a module configuration of a UI tool 340 provided for monitoring processing according to the present embodiment.
Fig. 9 is a diagram schematically illustrating an example of a sequence of collection processing according to the present embodiment.
Fig. 10 is a diagram schematically illustrating an example of a time-series DB 250 according to the present embodiment.
Fig. 11 is a diagram schematically illustrating a relation between a lag and a display according to the present embodiment.
Fig. 12 is a diagram schematically illustrating the relation between a lag and a display according to the present embodiment.
Fig. 13 is a diagram schematically illustrating an example of a display according to the present embodiment.
Fig. 14 is a diagram schematically illustrating an example of the display according to the present embodiment.
Fig. 15 is a diagram schematically illustrating an example of the display according to the present embodiment.
Fig. 16 is a diagram schematically illustrating another example of the display according to the present embodiment.
Fig. 17 is a diagram illustrating an example of a flowchart of the monitoring processing according to the present embodiment.

### DESCRIPTION OF EMBODIMENTS

An embodiment of the present invention will be described in detail with reference to the drawings. Note that the same or corresponding parts in the drawings are denoted by the same reference numerals to avoid the description from being redundant.

### <A. Application example>

First, an example of a case to which the present invention is applied will be described.

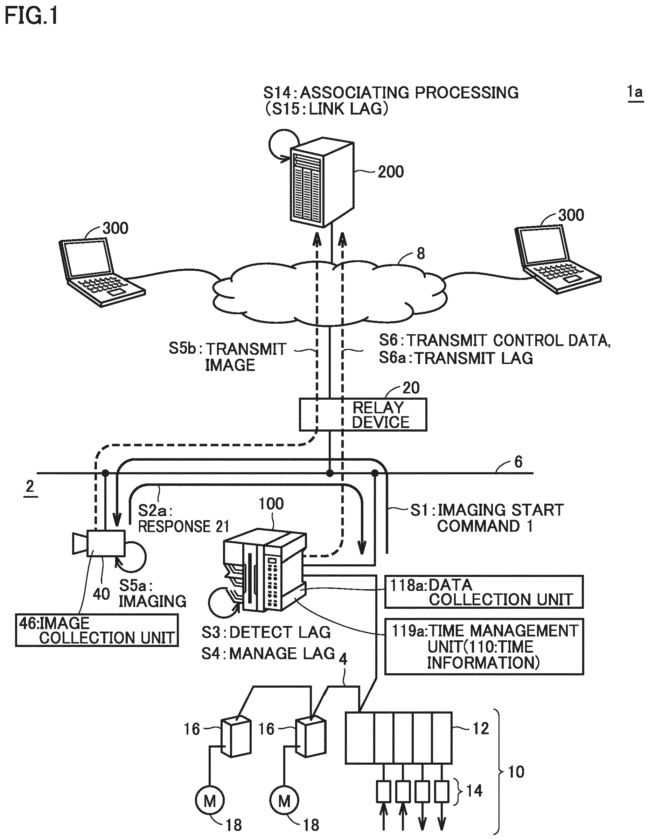

Fig. 1 is a diagram schematically illustrating an overall configuration of a control system 1a according to the present embodiment. Referring to Fig. 1, control system 1a is applied to FA and includes a PLC system 2, a server 200 that is an example of an "information management unit", and a terminal 300 that is responsible for development and maintenance of control system 1a.

PLC system 2 is also referred to as line, and may control the entire factory of FA, or may control specific manufacturing equipment or a specific manufacturing device installed in the factory. PLC system 2 includes, as main components, a programmable logic controller (PLC) 100 that is a typical example of a "control unit" that controls a control target, and an imaging device 40 that is an example of an "imaging unit". Imaging device 40 has an angle, an optical system, and the like adjustable so as to have an imaging range in which the control target can be imaged as a subject. In connection with imaging device 40, a lighting device may be provided.

PLC 100 is connected to a field instrument 10. Field instrument 10 includes any device necessary for controlling the control target. More specifically, field instrument 10 includes a device for communicating information with the control target (such as manufacturing equipment, a manufacturing device, or a sensor and an actuator included in the manufacturing equipment or the manufacturing device). In the example illustrated in Fig. 1, field instrument 10 includes a relay group 14 and a servomotor 18. Field instrument 10 may further include any device such as a servo driver 16 and a remote input/output (I/O) 12 illustrated in Fig. 1.

PLC 100 acquires data from field instrument 10, and executes a control operation in accordance with a user program created in advance to generate data to be provided to field instrument 10. Hereinafter, the data acquired by PLC 100 from field instrument 10 is also referred to as "input data", and the information provided to field instrument 10 is also referred to as "output data". Further, the input data and the output data are also collectively referred to as "input/output data" or "I/O data". The input data may include a value (for example, an output value of the sensor) indicating a state of field instrument 10, and the output data may include a command value for controlling field instrument 10 on the basis of a result of the control operation.

In the example illustrated in Fig. 1, PLC 100 and field instrument 10 are connected over a control system network 4, but the connection mode is not limited thereto, and PLC 100 and field instrument 10 may be connected by means of hard wiring.

As control system network 4, it is preferable to use an industrial communication protocol. As such a communication protocol, EtherCAT (registered trademark), EtherNet/IP (registered trademark), DeviceNet (registered trademark), CompoNet (registered trademark), and the like are known.

PLC system 2 can access cloud-based server 200 on an Internet 8 via an information system network 6 or a relay device 20 such as a gateway or a router. For example, a protocol such as EtherNet/IP (registered trademark) may be applied to information system network 6.

Server 200 communicates with PLC 100 and imaging device 40 over information system network 6 and Internet 8. Server 200 mainly manages information on PLC system 2 and provides various services.

Server 200 may be deployed on a cloud via Internet 8, or may be deployed, without using Internet 8, in a local network where PLC system 2 is present. It is possible to determine as desired the implementation form of server 200 in accordance with required performance, functionality, and the like.

Terminal 300 includes, for example, a general-purpose computer. Terminal 300 can access server 200 to enable a user operation for executing various processing as described later. In the present embodiment, this user operation may be achieved by providing a graphical user interface (GUI) for operating a desktop environment of server 200 connected from terminal 300 over Internet 8 in cooperation with an application 311 and a UI program 313 to be described later of terminal 300. Further, terminal 300 may communicate information with PLC 00 by means of universal serial bus (USB) communication without using either information system network 6 or Internet 8. In a case where PLC 100 also serves as a general-purpose computer, services such as a user interface (UI) and a GUI provided by terminal 300 may be provided by PLC 100.

PLC 100 executes a control operation to calculate a control command, and outputs, to the control target, the calculated control command to control the control target. PLC 100 cyclically controls the control target in accordance with a predetermined control cycle. PLC 100 includes a data collection unit 118a that collects, during the cyclic control, data on the control with the data associated with a collection time. The data collected by data collection unit 118a includes the control command and a state value indicating a state of the control target. PLC 100 executes a control operation using the collected state value to calculate the control command.

Upon detection of a predetermined event, PLC 100 transmits an imaging start command 1 to imaging device 40 (step S1). The predetermined event may include detection of an abnormality or a sign of an abnormality, or detection of the end of the predetermined cycle. The predetermined cycle includes, for example, a cycle based on the control cycle.

Upon receipt of imaging start command 1 from PLC 100, imaging device 40 starts imaging in accordance with imaging start command 1 thus received (step S5a) and transmits, to PLC 100, a response 21 to imaging start command 1 (step S2a). Imaging device 40 can transmit response 21 before and after the start of imaging. Imaging device 40 includes an image collection unit 46 that starts imaging and collects an image captured after the start of imaging with the image associated with an imaging time.

PLC 100 includes a time management unit 119a that measures time required from the transmission of imaging start command 1 to the reception of response 21 to the start of imaging from imaging device 40 and manages time information 110 based on the measurement. Time information 110 indicates a lag in imaging timing of imaging device 40. This lag corresponds to the time required from when PLC 100 transmits imaging start command 1 to when imaging device 40 starts imaging in accordance with imaging start command 1. More specifically, the lag indicates that the imaging time of the image collected by image collection unit 46 after the start of imaging in response to imaging start command 1 lags behind the collection time of the control data that is data on control collected by data collection unit 118a when imaging start command 1 is output. This lag dynamically changes in a manner that depends on a load of communication between PLC 100 and imaging device 40 (including a communication load such as traffic on information system network 6), a load of processing in imaging device 40, or the like.

Each time PLC 100 transmits imaging start command 1, PLC 100 measures time up to the reception of response 21 with a timer to detect a time delay as a lag (step S3), and time management unit 119a manages time information 110 on the detected lag (step S4). As described above, even if there is a dynamic change in load described above, it is possible to detect, by detecting the time lag each time an event is detected, in other words, each time imaging start command 1 is transmitted, the latest lag following the change.

This allows PLC 100 to cause time management unit 119a to manage the time lag between the control data collected in relation to the control on the control target and the image captured by imaging device 40.

Imaging device 40 transmits the captured image associated with the imaging time to server 200 (step S5b). PLC 100 transmits the control data associated with the collection time to server 200 (step S6) and transmits time information 110 on the lag to server 200 (step S6a).

Server 200 manages the control data associated with the collection time transferred from PLC 100 and the captured image associated with the imaging time transferred from imaging device 40 by storing the control data and the captured image in a storage as time-associated information (step S14). As a result, the control data and the captured image are stored in a time-series retrievable manner, and are managed in a time-associated manner on the basis of the collection time and the imaging time. Further, server 200 links, that is, associates time information 110 indicating the lag transferred from PLC 100 with the above-described associated information stored in the storage (step S15).

This allows control system 1a to manage, in the storage of server 200, the control data on control collected in relation to the control on the control target and the image captured by the imaging device with the control data and the image associated with the time lag between the control data and the image.

A description will be given below of a more specific application example of the present invention.

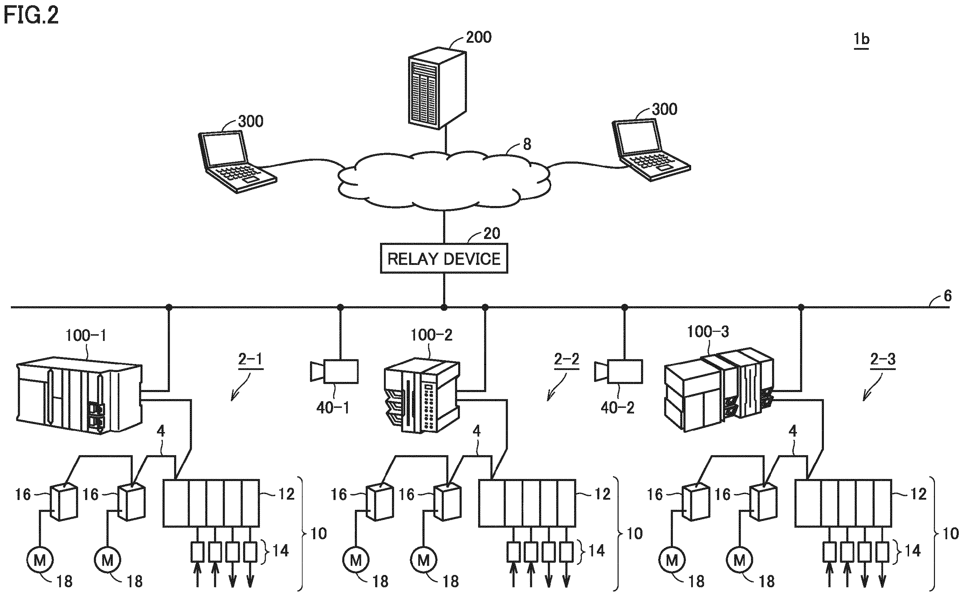

Fig. 2 is a diagram schematically illustrating an overall configuration of a control system 1b according to the present embodiment. Control system 1b in Fig. 2 includes a plurality of PLC systems 2 and a plurality of imaging devices 40, both being illustrated in Fig. 1. Control system 1b in Fig. 2 includes a PLC system 2-1, a PLC system 2-2, and a PLC system 2-3 (hereinafter, also collectively referred to as "PLC system 2") provided for different manufacturing processes, and an imaging device 40-1 and an imaging device 40-2 provided for the manufacturing processes. Control system 1b enables distributed control on a series of processes by, for example, providing PLC system 2-1 for a component process, providing PLC system 2-2 for an assembly process, and providing PLC system 2 -3 for an inspection process. The other configuration of control system 1b is similar to the corresponding configuration of control system 1a in Fig. 1, and thus, no description will be given below of the configuration. Imaging device 40-1 and imaging device 40-2 capture images with different camera orientations (imaging directions) relative to the same control target (subject), for example, by making angles of the cameras different.

In the following description, PLC system 2-1, PLC system 2-2, and PLC system 2-3 are similar in configuration to PLC system 2 illustrated in Fig. 1. Further, imaging device 40-1 and imaging device 40-2 are similar in configuration to imaging device 40 in Fig. 1. Although three PLC systems 2 and two imaging devices 40 are illustrated here, the number of PLC systems 2 and the number of imaging devices 40 are not limited thereto. Hereinafter, PLC system 2-1, PLC system 2-2, and PLC system 2-3 will be collectively referred to as "PLC system 2" in the description of the common functionality or configuration, and imaging device 40-1 and imaging device 40-2 will be collectively referred to as "imaging device 40" in the description of the common functionality or configuration.

### <B. Configuration of each device>

Next, an example of a hardware configuration of each device configuring the control system according to the present embodiment will be described.

### (b1: PLC 100)

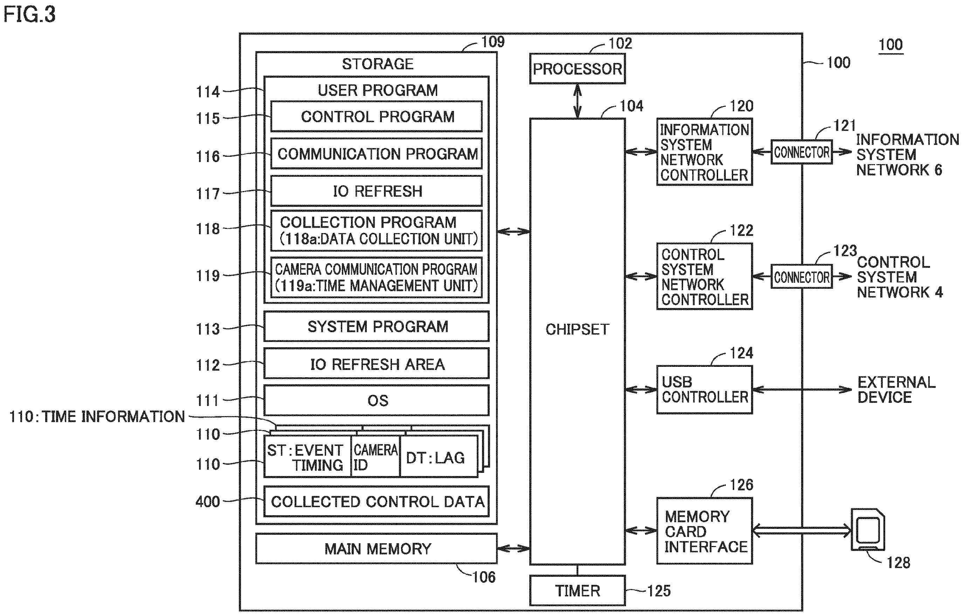

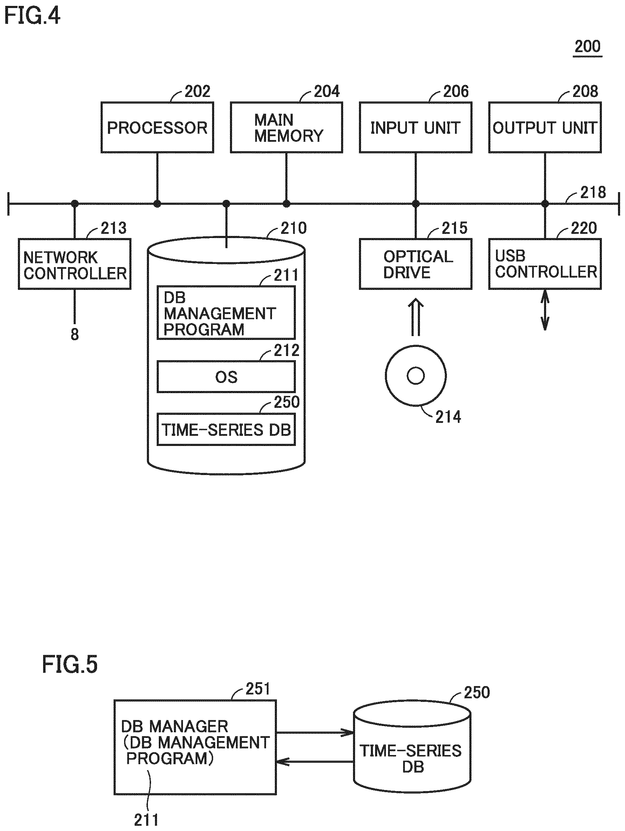

Fig. 3 is a block diagram illustrating an example of a hardware configuration of PLC 100 according to the present embodiment. Referring to Fig. 4, PLC 100 includes a processor 102 such as a central processing unit (CPU) or a micro-processing unit (MPU), a chipset 104, a main memory 106, a storage 109, an information system network controller 120 connected to a connector 121 including a physical circuit, a control system network controller 122 connected to a connector 123 including a physical circuit, a universal serial bus (USB) controller 124, a timer 125 including a counter circuit, and a memory card interface 126. Connector 121 is connected to information system network 6 to which server 200, PLC 100, and imaging device 40 belong, and connector 123 is connected to control system network 4 that is a network different from information system network 6 and to which field instrument 10 that is the control target belongs.

Processor 102 reads various programs stored in storage 109, deploys the read various programs into main memory 106, and executes the various programs to perform a control operation for controlling the control target and communication processing for establishing communications with an external device (server 200, terminal 300, imaging device 40, and field instrument 10). Chipset 104 controls data transmission and the like between processor 102 and each component.

Storage 109 stores an operating system (OS) 111, a system program 113, and a user program 114. System program 113 includes communication firmware for establishing communications with an external device including server 200 over information system network 6 and communication firmware for establishing communications with field instrument 10 over control system network 4.

User program 114 includes a control program 115, a communication program 116, an input/output (IO) refresh 117, a collection program 118, and a camera communication program 119. IO refresh 117 collects the state value of field instrument 10 that is the control target over control system network 4 and stores the state value in an IO refresh area 112. Further, IO refresh 117 transmits a control command stored in IO refresh area 112 to the control target over control system network 4. Control program 115 executes a control operation for the control target using the state value stored in IO refresh area 112 and calculates the control command. When executed, collection program 118 corresponds to a module of data collection unit 118a described above. When executed, camera communication program 119 corresponds to a module of time management unit 119a described above. Storage 109 stores time information 110 acquired by time management unit 119a and collected control data 400 collected by data collection unit 118a. User program 114 may include other various processing programs including a time synchronization program.

Time management unit 119a generates and stores time information 110 and manages time information 110 each time an event is detected and imaging start command 1 is transmitted. Referring to Fig. 3, time information 110 includes an event timing ST indicating a time at which an event is detected, a camera ID indicating an identifier of imaging device 40, and a lag DT. Camera ID indicates an identifier of imaging device 40 that has transferred response 21 to imaging start command 1, and lag DT indicates a time difference between when imaging start command 1 is transmitted to imaging device 40 and when response 21 is received from imaging device 40. This time difference corresponds to time required from the transmission of imaging start command 1 to the reception of response 21. Event timing ST and lag DT are measured using timer 125.

PLC 100 of each PLC system 2 executes time synchronization processing of making PLC 100 coincident in time counted by timer 125 with other PLCs 100 connected to information system network 6 in accordance with the time synchronization program. Further, PLC 100 of each PLC system 2 executes time synchronization processing of making PLC 100 coincident in counted time with the timer of field instrument 10 connected to control system network 4 in accordance with the time synchronization program.

Information system network controller 120 controls data communication with an external device over information system network 6 connected to connector 121.

Control system network controller 122 controls data communication with field instrument 10 over control system network 4 connected to connector 123.

USB controller 124 controls data communication with an external device (for example, a support device, terminal 300, or the like) over a USB connection.

Memory card interface 126 is configured to receive a memory card 128 in a detachable manner and is capable of writing data to memory card 128 and reading various data (such as user program 114 and data) from memory card 128.

PLC 100 may include an optical drive. The optical drive reads a program stored, in a non-transitory manner, in a computer-readable recording medium (for example, an optical recording medium such as a digital versatile disc (DVD)) and stores the program in storage 109 or the like.

The various programs executed on PLC 100 may be installed via a computer-readable recording medium or memory card 128, or may be downloaded from a device such as any computer on the network and then installed.

Fig. 3 illustrates the configuration example where processor 102 executes a program to provide necessary processing, but some or all of the processing thus provided may be implemented by a dedicated hardware circuit (for example, an application specific integrated circuit (ASIC), a field-programmable gate array (FPGA), or the like). Alternatively, a core part of PLC 100 may be implemented by hardware having a general-purpose architecture (for example, an industrial personal computer based on a general-purpose personal computer). Further, a plurality of OSs having different uses may be executed in parallel using a virtualization technology, and a necessary application may be executed on each OS.

### (b2: Server 200)

Fig. 4 is a block diagram illustrating an example of a hardware configuration of server 200 according to the present embodiment. Referring to Fig. 4, server 200 includes a processor 202, a main memory 204, an input unit 206, an output unit 208, a storage 210, an optical drive 215, a USB controller 220 for establishing communications with an external device, and a network controller 413 for establishing connection with networks including Internet 8. Such components are connected over a processor bus 218.

Processor 202 includes a CPU, a GPU, or the like, and reads a program stored in storage 210, deploys the read program into main memory 204, and executes the program to perform various processing as described later.

Main memory 204 includes a volatile storage device such as a DRAM or an SRAM. Storage 210 includes, for example, a non-volatile storage device such as an HDD or an SSD.

Storage 210 stores various programs for providing a function as server 200 in addition to an OS 212 for implementing a basic function. The various programs include a data base (DB) management program 211. Further, storage 210 has an area where time-series DB 250 is stored.

Input unit 206 includes a keyboard, a mouse, or the like, and receives a user operation on server 200. Output unit 208 includes a display, various indicators, a printer, or the like, and outputs a processing result and the like received from processor 202.

Server 200 includes optical drive 215 so as to allow a program stored, in a non-transitory manner, in a computer-readable recording medium 214 (for example, an optical recording medium such as a digital versatile disc (DVD)) to be read and installed in storage 210 or the like.

Fig. 4 illustrates the configuration example where processor 202 executes a program to provide functions necessary for server 200, but some or all of the functions thus provided may be implemented by a dedicated hardware circuit (for example, an ASIC or an FPGA).

Fig. 5 is a diagram illustrating a DB manager provided through execution of DB management program 211 illustrated in Fig. 4. Referring to Fig. 5, a DB manager 251 provided through the execution of DB management program 211 by processor 202 manages time-series DB 250 (for example, generation, aggregation, editing, analysis, or output of DB) in accordance with a database operation command according to, for example, a structured query language (SQL). Details of time-series DB 250 will be described later.

### (b3: Terminal 300)

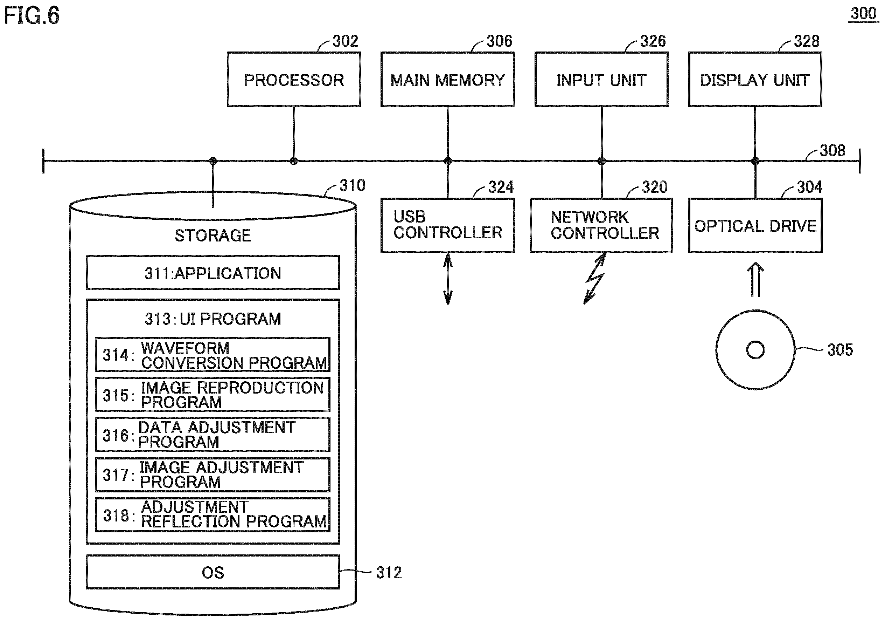

Fig. 6 is a block diagram illustrating an example of a hardware configuration of terminal 300 according to the present embodiment. Referring to Fig. 6, terminal 300 includes a processor 302 such as a CPU or an MPU, an optical drive 304, a main memory 306, a storage 310, a network controller 320, a USB controller 324, an input unit 326, and a display unit 328. Such components are connected over a bus 308.

Processor 302 reads various programs stored in storage 310, deploys the read programs into main memory 306, and executes the programs to perform necessary processing in terminal 300.

Storage 310 includes, for example, an HDD or an SSD. Storage 310 stores an OS 312, application 311, and user interface (UI) program 313. UI program 313 is executed in cooperation with application 311 to provide a UI tool 340 to be described later. UI program 313 causes a display of display unit 328 to display collected control data 400 collected by PLC 100 and the image collected by imaging device 40 separately or with the control data and the image associated with each other, and receives a user operation on the control data or the image thus displayed. UI program 313 includes a waveform conversion program 314 that converts the control data into waveform data in accordance with the collection time and outputs the waveform data, an image reproduction program 315 that reproduces the image (still image, moving image) collected by imaging device 40, a data adjustment program 316 that adjusts the displayed control data in accordance with a user operation, an image adjustment program 317 that adjusts the displayed image in accordance with a user operation, and an adjustment reflection program 318 that provides a tool for reflecting an adjustment amount based on a user operation to the image.

Note that a necessary program other than the program illustrated in Fig. 5 may be stored in storage 310.

Network controller 320 controls data communication with each PLC 100 and a device such as server 200 over information system network 6.

USB controller 324 controls data communication with an external device over a USB connection.

Input unit 326 includes a mouse, a keyboard, a touch panel, or the like, and receives a user operation. Display unit 328 includes a display, various indicators, or the like, and outputs a processing result or the like received from processor 302. Input unit 326 and display unit 328 may configure a display-integrated touch screen.

Terminal 300 may include optical drive 304. Optical drive 304 reads a program stored, in a non-transitory manner, in a computer-readable recording medium 305 (for example, an optical recording medium such as a digital versatile disc (DVD)) and stores the program in storage 310 or the like.

Various programs executed on terminal 300 may be installed via computer-readable recording medium 305, or may be downloaded from any server device on a network and then installed.

Fig. 6 illustrates the configuration example where processor 302 executes a program to provide necessary processes, but some or all of the processes thus provided may be implemented by a dedicated hardware circuit (for example, an ASIC or an FPGA).

### (b4: Imaging device)

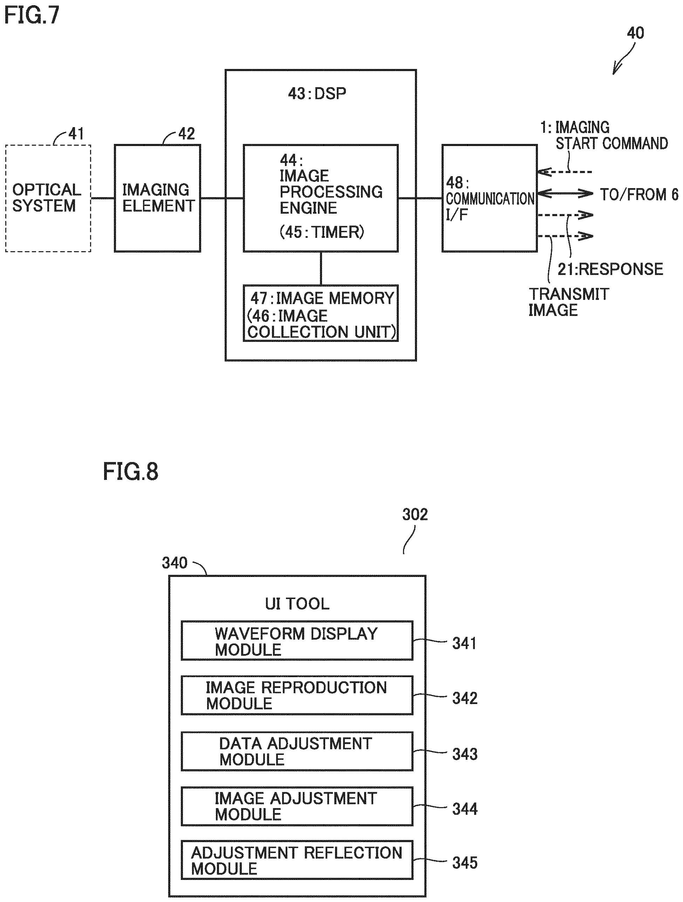

Fig. 7 is a diagram schematically illustrating an example of imaging device 40 according to the present embodiment. Referring to Fig. 7, imaging device 40 includes, as basic components, an optical system 41 including a lens, an imaging element 42, a digital signal processor (DSP) 43 having a processor circuit including an image processing engine 44 and an image memory 47, and a communication interface (I/F) 48 including a communication circuit connected to information system network 6. Imaging device 40 includes, as a single unit, a processing system including DSP 43 and communication I/F 48 and an imaging system including optical system 41 and imaging element 42, but the processing system may be configured separately from the imaging system.

Light reflected off a subject in the imaging range impinges on a photoelectric conversion element such as a complementary metal oxide semiconductor (CMOS) image sensor included in imaging element 42 through the lens of optical system 41, and is converted into an image signal by the image sensor. Image processing engine 44 receives the image signal from imaging element 42, processes the image signal on the basis of the time output by timer 45, and converts the image signal into a digital data image on a frame-by-frame basis. For example, it is converted into N (N > 1) frame images per second. Image processing engine 44 stores the frame image in image memory 47 as a still image or a moving image with the frame image associated with the imaging time counted by timer 45. Image memory 47 cooperates with image processing engine 44 to serve as image collection unit 46 that collects an image with the image associated with the imaging time counted by timer 45.

Communication I/F 48 receives imaging start command 1 transferred from PLC 100 over information system network 6, and outputs imaging start command 1 thus received to DSP 43. In response to imaging start command 1, DSP 43 starts image processing on the image signal output from the imaging system and controls communication I/F 48 to transmit response 21 to information system network 6.

For example, in the present embodiment, imaging device 40 starts imaging in response to imaging start command 1, and executes imaging for a predetermined cycle after the start of imaging. The length of this cycle is configurable. The frame-based image captured after the start of imaging is stored in image memory 47, for example, as a still image file or a moving image file.

### (b5: Configuration of UI tool)

Fig. 8 is a diagram illustrating an example of a module configuration of UI tool 340 provided for the monitoring processing according to the present embodiment. UI tool 340 is implemented by UI program 313 executed by processor 302 of terminal 300. UI tool 340 includes a waveform display module 341, an image reproduction module 342, a data adjustment module 343, an image adjustment module 344, and an adjustment reflection module 345 implemented by waveform conversion program 314, image reproduction program 315, data adjustment program 316, image adjustment program 317, and adjustment reflection program 318, respectively, executed by processor 302.

### <C. Outline of sequence of collection processing>

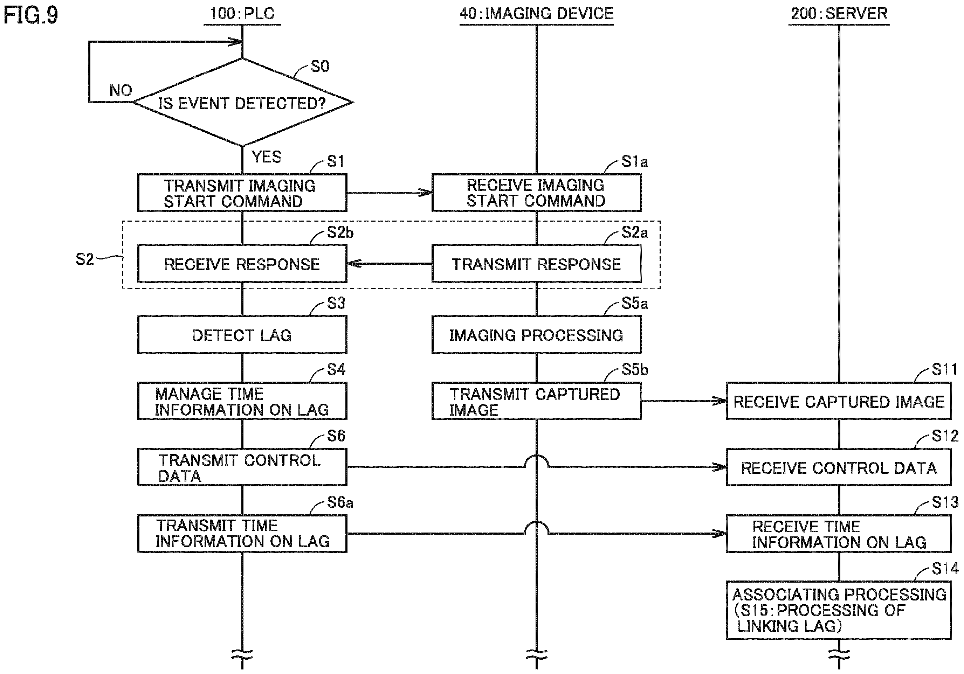

Fig. 9 is a diagram schematically illustrating an example of a sequence of collection processing according to the present embodiment. The sequence in Fig. 9 includes communication between devices including PLC 100, imaging device 40, and server 200 pertaining to collection of control data and a captured image, and processing executed by each device.

PLC 100 determines whether or not to detect a predetermined event (step S0). When it is not determined that an event has been detected (NO in step S0), PLC 100 repeats step S0, but when it is determined that an event has been detected (YES in step S0), PLC 100 transmits imaging start command 1 to imaging device 40 (step S1).

Upon receipt of imaging start command 1 from PLC 100 (step S1a), imaging device 40 starts imaging in accordance with imaging start command 1 thus received, executes image processing (step S5a), and transmits, to PLC 100, response 21 to imaging start command 1 (step S2a).

PLC 100 receives response 21 (step S2b). PLC 100 serves as time management unit 119a to detect a "delay", which is a time lag between the transmission of imaging start command 1 and the reception of response 21 to the start of imaging, using timer 125 (step S3), and manages the detected time lag by storing the time lag as time information 110 (step S4).

Imaging device 40 starts imaging in response to imaging start command 1, and transmits, to server 200, the captured image collected in image memory 47 with the captured image associated with the imaging time after the start of imaging (step S5b). For example, the captured image may be transferred to server 200 on a file-by-file basis. PLC 100 also transmits collected control data 400 on the control associated with the collection time to server 200 (step S6), and transmits time information 110 on the lag to server 200 (step S6a).

Server 200 receives the control data associated with the collection time transferred from PLC 100 and the image associated with the imaging time transferred from imaging device 40 (step S11, step S12). Further, server 200 receives time information 110 on the delay transferred from PLC 100 (step S13).

Server 200 serves as DB manager 251 to execute processing of storing, in time-series DB 250, the received control data and captured image with the control data and the captured image associated with each other on the basis of the collection time and the imaging time (step S14). Further, server 200 serves as DB manager 251 to link (associate) time information 110 received from PLC 100 with the associated information (step S15). More specifically, server 200 links (associates) time information 110 with the associated information acquired in step S14 in which event timing ST included in time information 110 and the collection time or the imaging time indicating approximately the same time as event timing ST are associated with each other (step S15).

This allows time-series DB 250 of server 200 to manage data on control collected in relation to the control on the control target and the image captured by imaging device 40 with the data and the image associated with a time lag between the data and the image.

### <D. Example of time-series DB>

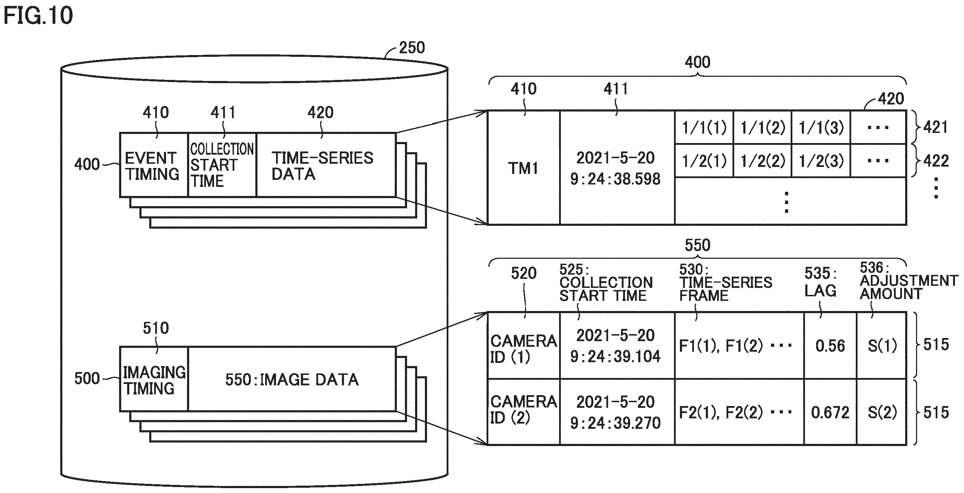

Fig. 10 is a diagram schematically illustrating an example of time-series DB 250 according to the present embodiment. Referring to Fig. 10, processor 202 of server 200 serves as DB manager 251 to store the data on control transferred from PLC 100 and the captured image transferred from imaging device 40 in time-series DB 250. More specifically, processor 202 stores, for each event, collected control data 400 collected for the event and the captured image collected on a file-by-file basis in image memory 47 as collected control data 400 and collected image data 500, respectively.

Collected control data 400 includes an event timing 410 indicating a time when an event is detected, a collection start time 411 at which collection of control data indicating one or more control commands or state values to be collected is started, and time-series data 420. Time-series data 420 includes pieces of time-series data 421, 422, .... The pieces of time-series data 421, 422, ... each include control data and a collection time associated with the control data. PLC 100 collects the control data in synchronization with the control cycle, so that the collection time indicates a time based on the cycle synchronized with the control cycle. Collected image data 500 includes an imaging timing 510 indicating a time when imaging start command 1 is received, and time-series image data 550 captured over a predetermined cycle in response to imaging start command 1. Image data 550 includes data 515 on each imaging device 40 provided in control system 1b. Data 515 includes an identifier 520 of the corresponding imaging device 40, a collection start time 525, a time-series frame 530, a lag 535, and an adjustment amount 536. Collection start time 525 indicates a time at which imaging device 40 captures an image in response to imaging start command 1 and collects the captured image. Time-series frame 530 indicates a set of time-series frames obtained by imaging from collection start time 525 or later, that is, after the start of imaging. Each frame is associated with a collection time.

Lag DT of time information 110 acquired for the corresponding imaging start command 1 is set as lag 535. More specifically, processor 202 serves as DB manager 251 to retrieve, on the basis of a time indicated by event timing ST of time information 110 transferred from PLC 100 and camera ID, data 515 corresponding to imaging timing 510 and identifier 520 indicating the time and camera ID, respectively, from collected image data 500. Processor 202 sets lag DT of time information 110 to lag 535 of data 515 thus retrieved.

This allows server 200 to manage the control data that is associated with the collection time and collected by data collection unit 118a, the image that is associated with the imaging time and collected by image collection unit 46, and time information 110 indicating lag DT (lag 535) with the control data, the image, and the time information 110 associated with each other.

### <E. Relation between lag between control data and image and display>

In the present embodiment, time-series frame 530 captured by imaging device 40 is stored in a storage device such as time-series DB 250 in a reproducible manner. In the present embodiment, "reproduction" of an image means reading image data (still image data or moving image data) stored in the storage device, and driving a display on the basis of the image data thus read. As a result, the display displays an image based on the image data.

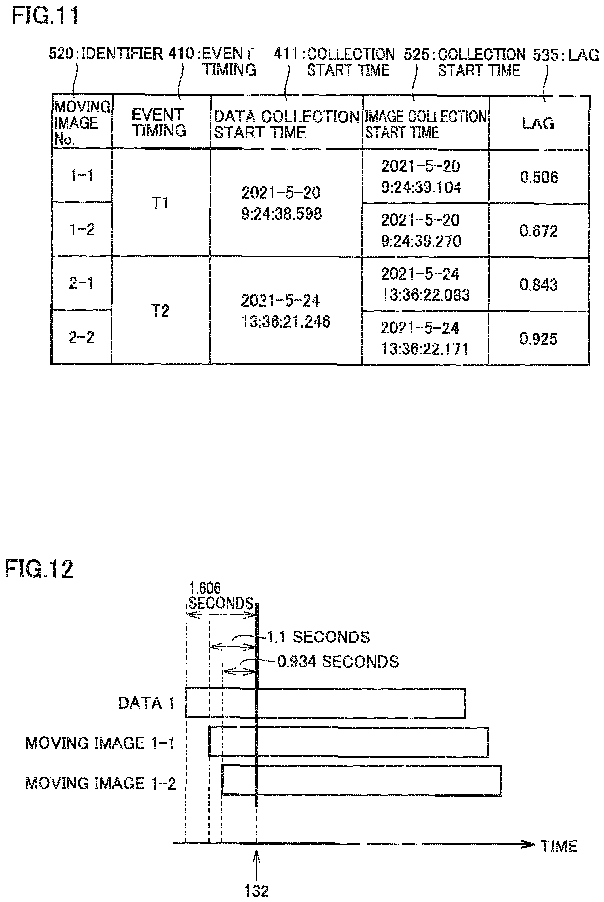

Figs. 11 and 12 are diagrams schematically illustrating a relation between a lag and a display according to the present embodiment. Fig. 11 illustrates an example of data created by processor 302 of terminal 300 in cooperation with server 200 on the basis of time-series DB 250 in order to display a screen on display unit 328 via UI tool 340. More specifically, the data includes, for each event, data (event timing 410 and collection start time 411) acquired by PLC 100 and data on imaging device 40 (for each of imaging device 40-1 and imaging device 40-2, identifier 520, collection start time 525, and lag 535 of the corresponding imaging device). The data in Fig. 11 has, for each of two event timings 410, collection start time 411 of time-series data 420, and collection start time 525 of time-series frame 530 and lag 535 of each of imaging device 40-1 and imaging device 40-2.

UI tool 340 causes terminal 300 to reproduce, on display unit 328, "data 1" of time-series data 420 of PLC 100, "moving image 1-1" based on time-series frame 530 of imaging device 40-1, and "moving image 1-2" based on time-series frame 530 of imaging device 40-2 according to the data in Fig. 10. PLC 100 controls a device such as an industrial robot that repeats the same action multiple times in synchronization with, for example, a cycle according to the control cycle. The repeated action may include, for example, but is not limited to, an action in which an arm of the industrial robot picks and places a workpiece. "Data 1" indicates a control command or a state value of a servomotor of the industrial robot collected for a certain one of the repeated pick and place actions. "Moving image 1-1" and "moving image 1-1" indicate moving images obtained by capturing images of the industrial robot in the corresponding pick and place action, the moving images being captured from different angles.

The data in Fig. 11 further includes "data 2" indicating a control command or a state value of the servomotor of the industrial robot collected for the next pick and place action, and captured "moving image 2-1" and "moving image 2-2".

Fig. 12 illustrates lags 535 between "data 1", and "moving image 1-1" and "moving image 1-2" illustrated in Fig. 11. Referring to Fig. 12, in order to output "data 1", "moving image 1-1", and "moving image 1-2" to display unit 328 on the same time axis, UI tool 340 starts to output "data 1" as a waveform. The reproduction of "moving image 1-1" is started 0.506 seconds indicated by lag 535 after the start of the waveform output, and the reproduction of "moving image 1-2" is started 0.672 seconds indicated by lag 535 after the start of the waveform output.

For example, a case where a certain point (position) on the waveform is designated at a certain time 132 after the start of collection of "data 1" in accordance with a user operation or the like will be described. Processor 302 serves as UI tool 340 to identify a collection time of control data corresponding to the designated point as 1.606 seconds from the start of collection on the basis of time 132 of the designated point. For "moving image 1-1", processor 302 identifies, from time-series frame 530, an image of the designated point as a frame image (for example, a still image) after 1.1 seconds (that is, 1.606 seconds - 0.506 seconds = 1.1 seconds) from the start of imaging on the basis of lag 535, and reproduces the image. Further, for "moving image 1-2", processor 302 identifies, from time-series frame 530, an image of the designated point as a frame image after 0.934 seconds (that is, 1.606 seconds - 0.672 seconds = 0.934 seconds) from the start of imaging on the basis of lag 535, and reproduces the image.

As described above, in a case where "moving image 1-1" and "moving image 1-2" are reproduced in parallel with the output of the waveform of "data 1", processor 302 can serves as UI tool 340 to correct the time lag on the basis of lag 535 with which "moving image 1-1" and "moving image 1-2" are associated and then reproduce each of "moving image 1-1" and "moving image 1-2" in synchronization with the output of the waveform of "data 1". This is also referred to as "synchronous reproduction" in the present embodiment.

### (e1: Example of display and adjustment)

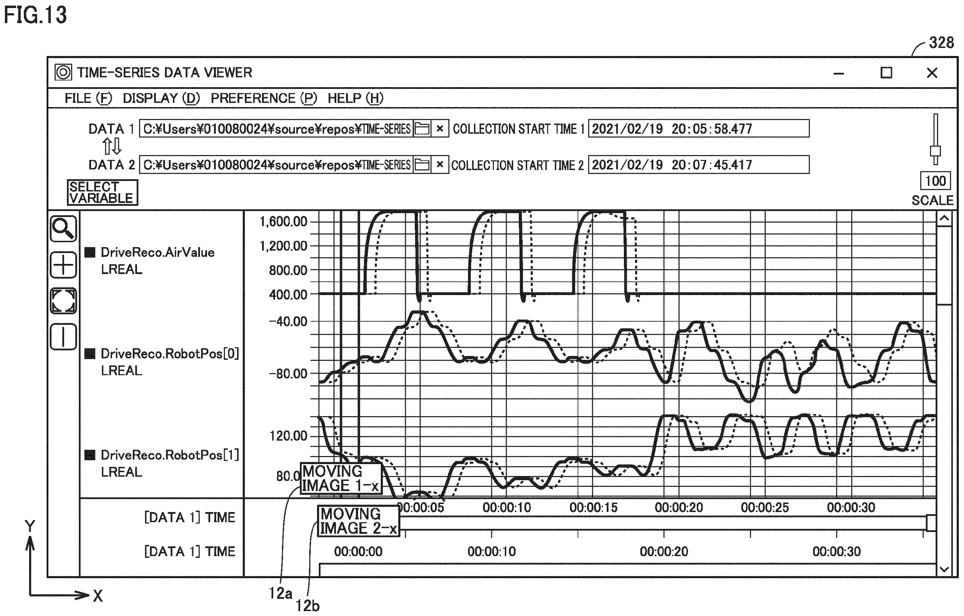

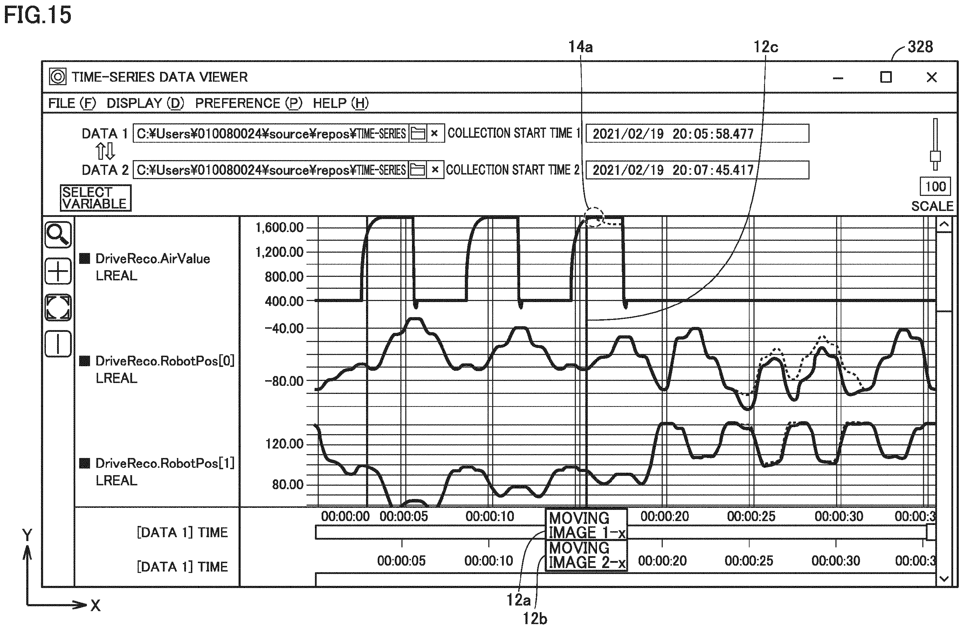

Figs. 13, 14 and 15 are diagrams schematically illustrating examples of a display according to the present embodiment. Fig. 13 is an example of a screen showing, for example, waveforms of time-series state values of collected control data 400 on display unit 328. The screen in Fig. 13 includes waveforms of "data 1" and "data 2". In the screen in Fig. 13, the vertical axis (Y axis) represents values of "data 1" and "data 2", and the horizontal axis (X axis) represents time. In Fig. 13, the waveforms of "data 1" and "data 2" are shifted in a direction in which the time axis (X axis) extends. The user can operate UI tool 340 to slide one of the waveforms in the time axis direction to match the one waveform to the other waveform. Fig. 15 illustrates an example of the display of the waveforms after the waveform adjustment.

In Fig. 13, for each waveform, buttons 12a and 12b are each displayed by the UI tool to enable a user operation on a corresponding "moving image 1-x" or "moving image 2-x". The user can reproduce, by operating button 12a of "moving image 1-x", "action 1-1" and "moving image 1-2" associated with button 12a via UI tool 340. The user can reproduce, by operating button 12b of "moving image 2-x", "action 2-1" and "moving image 2-2" associated with button 12b via UI tool 340.

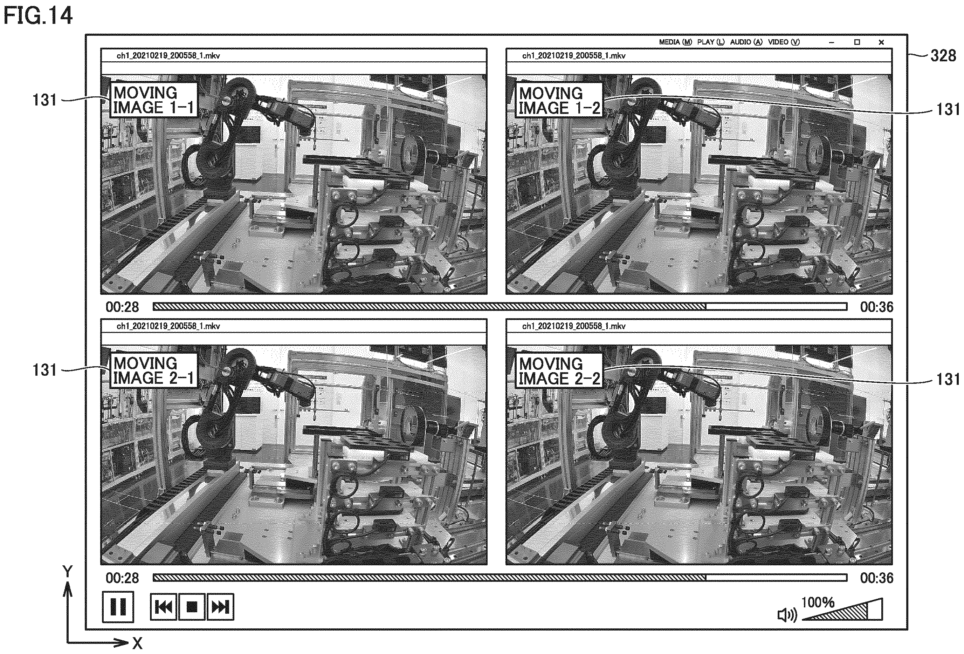

Fig. 14 illustrates an example of a display including a screen of "moving image 1-x" and a screen of "moving image 2-x" being reproduced. In Fig. 14, a total of four moving images of "moving image 1-x" and "moving image 2-x" each indicated by a title 131 are simultaneously displayed on a single screen, but the display mode is not limited thereto, and the moving images may be displayed in a switchable manner. Further, the moving image of "moving image 1-x" may be displayed as a thumbnail on button 12a in Fig. 13, and the moving image of "moving image 2-x" may be displayed as a thumbnail on button 12b in Fig. 13. Further, UI tool 340 may display the screen in Fig. 13 and the screen in Fig. 14 in multiple windows on display unit 328.

In the screens in Figs. 13 and 14, as illustrated in Figs. 10 and 12, when the output of the waveform of "data 1" is started, the reproduction of "moving image 1-1" is started 0.506 seconds after the start of the output, and the reproduction of "moving image 1-2" is started 0.672 seconds after the start of the output.

UI tool 340 causes button 12a and button 12b in Fig. 13 to automatically slide and move in the direction in which the X axis (time axis) extends in accordance with reproduction speeds of "moving image 1-x" and "moving image 2-x", respectively.

Further, the user can operate button 12a or button 12b in Fig. 13 to manually slide a corresponding button. In this case, UI tool 340 executes rewind or fast-forward reproduction of the image in accordance with the moving direction based on the user operation. Further, it is possible to cause UI tool 340 to change the reproduction speed in accordance with the moving speed of buttons 12a and 12b on the basis of the user operation.

Fig. 15 illustrates a point 14a where the waveforms of "data 1" and "data 2" are out of alignment. The user slides buttons 12a and 12b to move a line 12c extending from buttons 12a and 12b in the Y-axis direction to a position of point 14c on the waveforms. When line 12c reaches the position of point 14a, UI tool 340 identifies a frame at a time corresponding to point 14c for "moving image 1-x" and "moving image 2-x" by searching time-series frame 530, and reproduces the frame.

### (e2: Another example of display and adjustment)

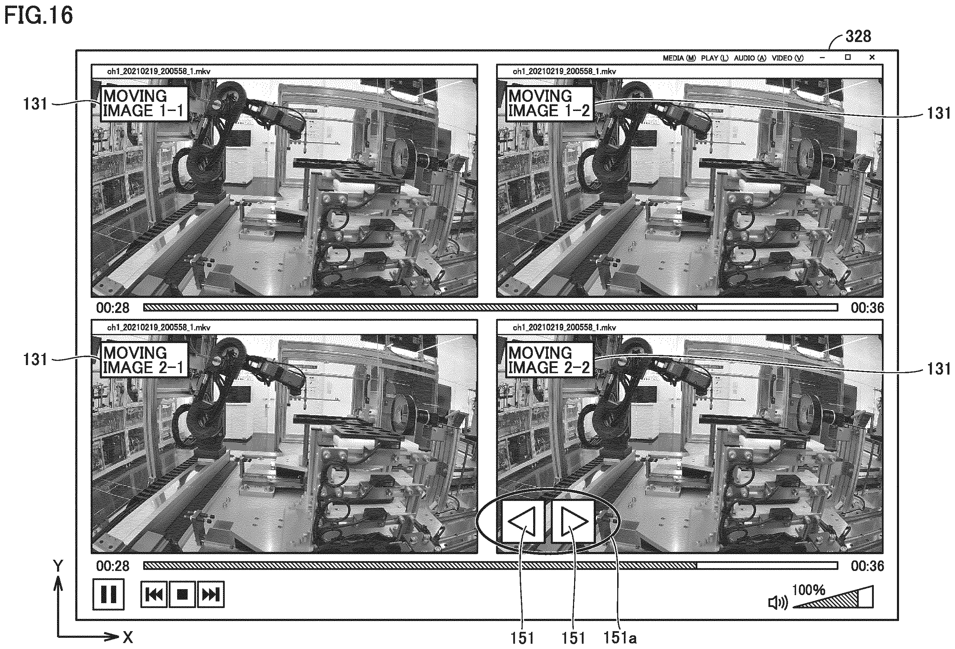

Fig. 16 is a diagram schematically illustrating another example of the display according to the present embodiment. The user can adjust a reproduction time lag between images by operating UI tool 340.

Referring to Fig. 16, processor 302 serves as UI tool 340 to display four images of "moving image 1-1", "moving image 1-2", "moving image 2-1", and "moving image 2-2" on display unit 328 on the same screen. A window displaying each image of the screen may further display title 131 identifying the image.

The respective images of the windows in Fig. 16 indicate frame images (still images) of "moving image 1-1" and "moving image 1-2" to which "reproduction synchronization" with "data 1" is applied, and frame images (still images) of "moving image 2-1" and "moving image 2-2" to which "reproduction synchronization" with "data 2" is applied, at, for example, time 132.

From the four reproduced images captured at the timing of time 132, the user can visually determine whether or not the imaging timings of these images are coincident with or different from each other. Further, on the basis of the determination result, the user can instruct UI tool 340 to execute frame-by-frame forward or frame-by-frame rewind reproduction of an image.

For example, a case where the user determines that the frame image of "moving image 2-2" is different in imaging timing from the other three frame images will be described. When the user executes an operation to designate an area 151a of the window of "moving image 2-2", UI tool 340 receives the designation operation and displays a button 151 that can be operated by the user in area 151a in accordance with the designation operation. Button 151 is operated by the user to execute frame-by-frame forward or frame-by-frame rewind reproduction of the image of the window.

When the user operates button 151, UI tool 340 executes frame-by-frame forward or frame-by-frame rewind reproduction of the image of the window of "moving image 2-2" in accordance with a received operation amount. When the user compares the image subjected to frame-by-frame forward or frame-by-frame rewind reproduction with the images of the other windows and determines that the imaging timings of these images coincide with each other, the user stops the frame-by-frame forward or frame-by-frame rewind operation of button 151 and executes a determination operation. Upon receipt of the determination operation of button 151, UI tool 340 stops frame-by-frame forward or frame-by-frame rewind reproduction of the image of the window of "moving image 2-2".

Processor 302 may serve as UI tool 340 to store an amount of frame-by-frame forward or frame-by-frame rewind operation. More specifically, processor 302 acquires the amount of frame-by-frame operation executed by the user on button 151, and stores the acquired the amount of frame-by-frame operation as adjustment amount 536 with adjustment amount 536 associated with data 515 of "moving image 2-2" associated with "data 2" of time-series DB 250. At the next time of reproduction of "moving image 1-x" and "moving image 2-x" associated with "data 2", processor 302 may serve as UI tool 340 to display associated adjustment amount 536 as information that supports a frame-by-frame forward or frame-by-frame rewind operation of "moving image 2-2". Processor 302 can serve as UI tool 340 to identify a reproduction position of image data at a time point when user operation input is received during reproduction, for example, at time 132, and use, as adjustment amount 536, section information indicating a specific section of time-series frame 515 of the image data starting from the identified reproduction position. For example, the section information indicated by adjustment amount 536 includes the number of frames based on the amount of user operation, that is, frame-by-frame forward or frame-by-frame rewind from the start position. In Fig. 10, time-series frames 515 are each associated with a corresponding one of section information S(1) and section information S(2).

A cause of such an imaging timing lag between images may include, for example, a variation in load of image processing in imaging device 40, a variation in load of frame-by-frame image processing, or the like.

### <F. Monitoring processing>

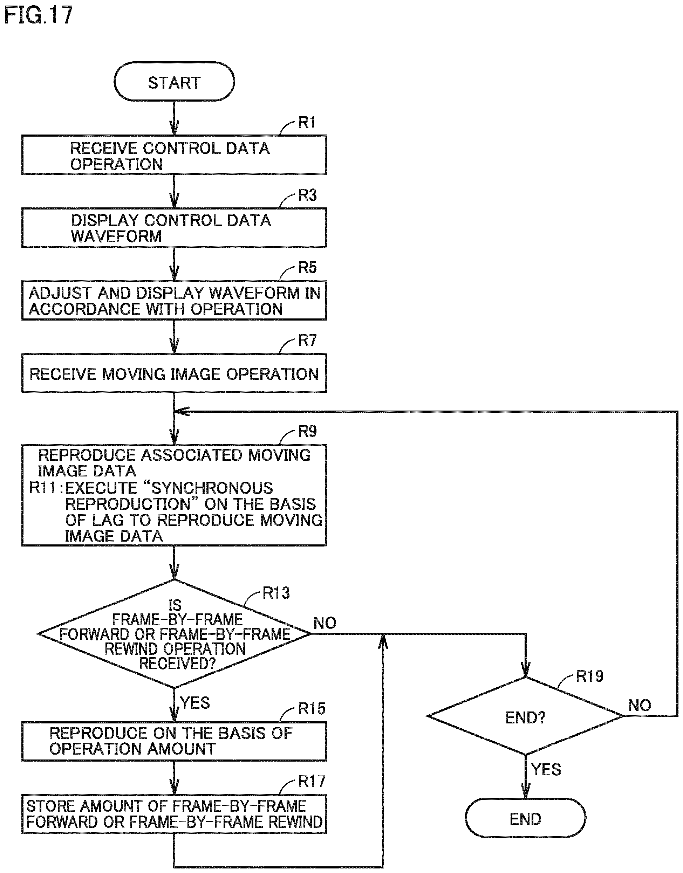

Fig. 17 is a diagram illustrating an example of a flowchart of monitoring processing according to the present embodiment. The flowchart in Fig. 17 is generally stored as a program, and processor 302 of terminal 300 reads and executes the program to execute processing. The monitoring processing according to the present embodiment includes the processing pertaining to the display and adjustment described above.

Referring to Fig. 17, processor 302 serves as UI tool 340 to execute the processing in Fig. 17. First, processor 302 serves as waveform display module 341 to cause display unit 328 to display a waveform screen based on the control data, for example, the screen in Fig. 13, on the basis of a user operation on terminal 300 received from input unit 326 (steps R1 and R2).

Processor 302 serves as data adjustment module 343 to adjust a waveform displayed on the screen in Fig. 13 by, for example, sliding the waveform in the time axis direction the basis of the user operation, and cause display unit 328 to display, for example, the adjusted waveform in Fig. 15 (step R5).

On the basis of the user operation, processor 302 receives a user operation on "moving image 1-x" or "moving image 2-x" (step R7). "Moving image 1-x" or "moving image 2-x" designated by the user operation corresponds to collected image data 500 associated with collected control data 400 subjected to the operation in step R3 .

Processor 302 serves as image reproduction module 342 to reproduce "moving image 1-x" or "moving image 2-x", and cause display unit 328 to display the screen in Fig. 14, for example (step R9). In the reproduction scene, for example, as illustrated in Fig. 15, processor 302 serves as image adjustment module 344 to execute "synchronous reproduction" on time-series frame 530 of each moving image on the basis of lag 535 associated with the moving image to reproduce the moving images (step R11).

On the basis of the user operation, processor 302 determines whether or not a frame-by-frame forward or frame-by-frame rewind operation on an image has been received (step R13). When determining that the operation has not been received (NO in step R13), processor 302 determines whether or not to terminate the monitoring processing (step R19). For example, when determining to terminate the monitoring processing on the basis of the user operation (YES in step R19), processor 302 terminates the series of processing, but when determining not to terminate the monitoring processing (NO in step R19), the processing returns to step R9 to continue the image reproduction.

When determining that a frame-by-frame forward or frame-by-frame rewind operation on an image has been received on the basis of the user operation (YES in step R13), processor 302 serves as image adjustment module 344 to execute frame-by-frame forward or frame-by-frame rewind reproduction of the image on the basis of the amount of user operation, that is, frame-by-frame forward or frame-by-frame rewind operation, on button 151 as illustrated in Fig. 16 (step R15).

Processor 302 serves as adjustment reflection module 345 to store the amount of frame-by-frame forward or frame-by-frame rewind operation acquired in step R15 as adjustment amount 536 illustrated in Fig. 10 with the operation amount associated with data 515 of the image subjected to the operation in step R15 (step R17). Thereafter, the processing proceeds to step R19.

In the embodiment, adjustment amount 536 is acquired on a frame-by-frame basis (per frame) from the amount of user operation, but adjustment amount 536 is not limited to an amount on a frame-by-frame basis. A configuration where a plurality of frames are adjusted with one operation amount is also possible. Further, adjustment amount 536 is not limited to an amount on a frame-by-frame basis, and can be acquired on a time basis (for example, 0.1 seconds or the like) from the amount of user operation.

Further, in a scene where collected image data 500 of imaging device 40 is reproduced, processor 302 serves as image adjustment module 344 to adjust, on the basis of the section information (section information S(1) or section information S(2) in Fig. 10) indicated by adjustment amount 536 associated with collected image data 500, the reproduction speed (for example, the number of reproduction frames per unit time) of the frames corresponding to the section. This adjustment includes, but is not limited to, fast-forward reproduction, rewind reproduction, skip-forward reproduction, and the like. This allows processor 302 to correct, during reproduction, an imaging timing lag between imaging devices 40 in the above-described section and execute reproduction with the reproduction timings of collected image data 500 coincident between imaging devices 40.

### <G. Modification>

In the above-described embodiment, collected control data 400 and collected image data 500 associated with collected control data 400 are managed by server 200, but the device responsible for the management is not limited to server 200, and may be PLC 100. PLC 100 stores, in storage 109, collected control data 400 and collected image data 500 associated with collected control data 400.

Further, time lag 535 between collected control data 400 and collected image data 500 associated with collected control data 400 is acquired as time from when time management unit 119a of PLC 100 transmits imaging start command 1 to each of imaging device 40-1 and imaging device 40-2 to when response 21 to the start of imaging is received from each imaging device 40, but the method for acquiring lag 535 is not limited to such a method for acquiring lag 535 from the communication time.

For example, time management unit 119a of PLC 100 may acquire lag 535 by calculating a time difference between collection start time 411 of collected control data 400 and collection start time 525 of each piece of data 515 of collected image data 500 stored in storage 109. Further, the function of time management unit 119a may be implemented in server 200. More specifically, server 200 may acquire lag 535 by calculating the time difference between collection start time 411 of collected control data 400 and collection start time 525 of each piece of data 515 of collected image data 500 stored in time-series DB 250. Further, the function of time management unit 119a may be implemented in terminal 300. More specifically, terminal 300 may serve as UI tool 340 to acquire lag 535 by calculating the time difference between collection start time 411 and collection start time 525 of each piece of data 515 for data subject to the monitoring processing, that is, collected control data 400 provided from server 200 and collected image data 500 associated with collected control data 400.

Further, regarding lag 535, both the communication time and the time difference between collection start time 411 and collection start time 525 described above may be detected, and a representative value (for example, average) of both may be set to lag 535.

In the above-described embodiment, imaging start command 1 and response 21 are transferred over information system network 6, but the transfer path is not limited to information system network 6. For example, PLC 100 is directly connected to each of imaging device 40-1 and imaging device 40-2 by means of a signal line of a wire or a cable, that is, PLC 100 connects each imaging device 40 by means of the signal line without the intervention of another device, and communicates imaging start command 1 and response 21 over the signal line. In this case, the traffic on the signal line between PLC 100 and imaging device 40 does not affect the above-described time difference. Therefore, time lag 535 depends on the load of communication processing in imaging device 40.

In the above-described embodiment, PLC 100 uses the time counted by timer 125 as the control data collection time. PLC 100 causes timer 125 to time-synchronize with a timer (not illustrated) included in field instrument 10 belonging to control system network 4 so as to make the time counted by timer 125 coincident with the time counted by the timer included in field instrument 10. Field instrument 10 can attach a detection time to the detected state value and transfer the state value to PLC 100. In this case, since PLC 100 can use the detection time attached to the state value collected from field instrument 10 as the collection time, PLC 100 can skip the processing of associating the collection time indicated by timer 125 with the control data (state value) collected from field instrument 10.

Further, PLC 100 may be configured to time-synchronize with imaging device 40 so as to make the time counted by timer 125 coincident with the time counted by timer 45. In a case where PLC 100 and imaging device 40 are time-synchronized with each other as described above, time lag 535 described above may include a time synchronization error.

Further, PLC 100 may be configured to time-synchronize with other PLCs 100 of control system 1b so as to make the times counted by timers 125 of PLCs 100 coincident with each other.

### <H. Appendix>

The present embodiment as described above includes the following technical ideas.

### [Configuration 1]

A control system (1a, 1b) including:
a control unit (100) configured to control a control target (10); and
an imaging unit (40) having an imaging range where the control target can be imaged as a subject, in which
the control unit includes:
   a communication unit (119) configured to transmit, upon detection of an event, an imaging start command (1) to the imaging unit; and
   a data collection unit (118a) configured to collect control data on control with the control data associated with a collection time,
   the imaging unit includes an image collection unit (46) configured to start imaging in accordance with the imaging start command transferred from the control unit and collect a captured image with the captured image associated with an imaging time, and
   the control system further includes a time management unit (119a) configured to manage time information (10) indicating a time lag (DT) between the control data collected by the data collection unit and the image collected by the image collection unit.

### [Configuration 2]

The control system according to configuration 1, in which the time lag includes time from when the control unit transmits the imaging start command to the imaging unit to when the control unit receives a response to start of imaging from the imaging unit.

### [Configuration 3]

The control system according to configuration 2, further including an information management unit (200, 250) configured to manage the control data collected by the data collection unit and associated with the collection time, the image collected by the image collection unit and associated with the imaging time, and the time information indicating the time lag with the control data, the image, and the time information associated with each other.

### [Configuration 4]

The control system according to configuration 3, in which the control unit includes a first connector (121) connected to a network (6) to which the information management unit and the imaging unit belong, and communicates the imaging start command and the response with the imaging unit over the network.

### [Configuration 5]

The control system according to the configuration 3, in which the control unit communicates the imaging start command and the response with the imaging unit over a signal line.

### [Configuration 6]

The control system according to any one of configurations 1 to 5, in which the time lag is detected each time the event is detected.

### [Configuration 7]

The control system according to any one of configurations 1 to 6, in which
the collection time associated with the control data collected by the data collection unit includes a collection start time (411),
the imaging time associated with the captured image collected by the image collection unit includes an imaging start time (525), and
the time lag includes a time difference between the collection start time and the imaging start time.

### [Configuration 8]

The control system according to any one of configurations 1 to 7, in which the event includes a predetermined event pertaining to control on the control target.

### [Configuration 9]

The control system according to configuration 7, in which
the control unit cyclically controls the control target, and
the predetermined event includes detection of end of a predetermined cycle pertaining to control.

### [Configuration 10]

The control system according to any one of configurations 1 to 9, further including a user interface (UI) unit (340), in which
the control unit cyclically controls the control target, and
the UI unit includes:
   a waveform display unit (341) configured to convert a plurality of pieces of the control data collected by the data collection unit into a waveform on a basis of the collection time associated with each of the plurality of pieces of control data, and display the waveform obtained as a result of the conversion; and
   an image reproduction unit (342) configured to reproduce the image collected by the image collection unit in accordance with the imaging time associated with the image.

### [Configuration 11]

The control system according to configuration 10, in which
the image includes a moving image including a plurality of frame images each associated with the imaging time, and
the UI unit includes an image adjustment unit (344) configured to identify, on a basis of the collection time associated with the control data corresponding to a user-designated point on the waveform that has been displayed and the time lag, the frame image associated with the imaging time corresponding to the user-designated point from the plurality of frame images, and reproduce the frame image.

### [Configuration 12]

The control system according to configuration 11, in which
the imaging unit includes a plurality of imaging units (40-1, 40-2) having an imaging range where the control target can be imaged as a subject and having different imaging directions in which the control target is imaged, and
the time management unit manages, for each of the plurality of imaging units, time information indicating the time lag between the control data collected by the data collection unit and the image collected by the image collection unit included in the imaging unit.

### [Configuration 13]

The control system according to configuration 12, in which for each of the imaging units, the image adjustment unit identifies, on a basis of the collection time associated with the control data corresponding to the user-designated point and the time lag indicated by the time information of the imaging unit, the frame image associated with the imaging time corresponding to the user-designated point from the plurality of frame images configuring an image captured by the imaging unit, and reproduces the frame image.

### [Configuration 14]

The control system according to any one of configurations 11 to 13, in which upon receipt of a user operation during reproduction by the image reproduction unit, the UI unit identifies a reproduction position in the plurality of frame images corresponding to a time point of the receipt, and stores information on a predetermined section starting from the identified reproduction position based on an amount of the user operation on the image with the information on the predetermined section associated with the image.

### [Configuration 15]

The control system according to any one of configurations 11 to 13, in which when reproducing the image, the image adjustment unit adjusts a reproduction speed of the image on a basis of the information on the predetermined section associated with the image.

It should be understood that the embodiment disclosed herein is illustrative in all respects and not restrictive. The scope of the present invention is defined by the claims rather than the above description, and the present invention is intended to include the claims, equivalents of the claims, and all modifications within the scope of claims.

### REFERENCE SIGNS LIST

1: imaging start command, 1a, 1b: control system, 2: PLC system, 4: control system network, 6: information system network, 8: Internet, 10: field instrument, 12a, 12b, 151: button, 12c: line, 14: relay group, 14a, 14c: point, 16: servo driver, 18: servomotor, 20: relay device, 21: response, 40: imaging device, 41: optical system, 42: imaging element, 43: DSP, 44: image processing engine, 45, 125: timer, 46: image collection unit, 47: image memory, 102, 202, 302: processor, 104: chipset, 106, 306: main memory, 109, 210, 310: storage, 110: time information, 112: IO refresh area, 113: system program, 114: user program, 115: control program, 116: communication program, 117: IO refresh, 118: collection program, 118a: data collection unit, 119: camera communication program, 119a: time management unit, 120: information system network controller, 121, 123: connector, 122: control system network controller, 124, 220, 324: USB controller, 126: memory card interface, 128: memory card, 131: title, 132: time, 151a: area, 200: server, 204: main memory, 206, 326: input unit, 208: output unit, 211: management program, 214, 305: recording medium, 215, 304: optical drive, 218: processor bus, 340: tool, 251: DB manager, 300: terminal, 308: bus, 311: application, 313: UI program, 314: waveform conversion program, 315: image reproduction program, 316: data adjustment program, 317: image adjustment program, 318: adjustment reflection program, 320, 413: network controller, 328: display unit, 341: waveform display module, 342: image reproduction module, 343: data adjustment module, 344: image adjustment module, 345: adjustment reflection module, 400: collected control data, 410, ST: event timing, 411, 525: collection start time, 420: time-series data, 500: collected image data, 510: imaging timing, 520: identifier, 530: time-series frame, 535, DT: lag, 536: adjustment amount, 550: image data, 250: time-series DB, 48: communication I/F, R1, R3, R5, R7, R9, R11, R13, R15, R17, R19, S0, S1, S1a, S2a, S2b, S3, S4, S5a, S5b, S6, S6a, S11, S12, S13, S14, S15: step

## Claims

1. A control system comprising:
a control unit configured to control a control target; and
an imaging unit having an imaging range where the control target can be imaged as a subject, wherein
the control unit includes:
a communication unit configured to transmit, upon detection of an event, an imaging start command to the imaging unit; and
a data collection unit configured to collect control data on control with the control data associated with a collection time,
the imaging unit includes an image collection unit configured to start imaging in accordance with the imaging start command transferred from the control unit and collect a captured image with the captured image associated with an imaging time, and
the control system further comprises a time management unit configured to manage time information indicating a time lag between the control data collected by the data collection unit and the image collected by the image collection unit.

2. The control system according to claim 1, wherein the time lag includes time from when the control unit transmits the imaging start command to the imaging unit to when the control unit receives a response to start of imaging from the imaging unit.

3. The control system according to claim 2, further comprising an information management unit configured to manage the control data collected by the data collection unit and associated with the collection time, the image collected by the image collection unit and associated with the imaging time, and the time information indicating the time lag with the control data, the image, and the time information associated with each other.

4. The control system according to claim 3, wherein
the control unit includes a first connector connected to a network to which the information management unit and the imaging unit belong, and
communicates the imaging start command and the response with the imaging unit over the network.

5. The control system according to claim 3, wherein the control unit communicates the imaging start command and the response with the imaging unit over a signal line.

6. The control system according to any one of claims 1 to 5, wherein the time lag is detected each time the event is detected.

7. The control system according to any one of claims 1 to 6, wherein
the collection time associated with the control data collected by the data collection unit includes a collection start time,
the imaging time associated with the captured image collected by the image collection unit includes an imaging start time, and
the time lag includes a time difference between the collection start time and the imaging start time.

8. The control system according to any one of claims 1 to 7, wherein the event includes a predetermined event pertaining to control on the control target.

9. The control system according to claim 7, wherein
the control unit cyclically controls the control target, and
the predetermined event includes detection of end of a predetermined cycle pertaining to control.

10. The control system according to any one of claims 1 to 9, further comprising a user interface (UI) unit, wherein
the control unit cyclically controls the control target, and
the UI unit includes:
a waveform display unit configured to convert a plurality of pieces of the control data collected by the data collection unit into a waveform on a basis of the collection time associated with each of the plurality of pieces of control data, and display the waveform obtained as a result of the conversion; and
an image reproduction unit configured to reproduce the image collected by the image collection unit in accordance with the imaging time associated with the image.

11. The control system according to claim 10, wherein
the image includes a moving image including a plurality of frame images each associated with the imaging time, and
the UI unit includes an image adjustment unit configured to identify, on a basis of the collection time associated with the control data corresponding to a user-designated point on the waveform that has been displayed and the time lag, the frame image associated with the imaging time corresponding to the user-designated point from the plurality of frame images, and reproduce the frame image.

12. The control system according to claim 11, wherein
the imaging unit includes a plurality of imaging units having an imaging range where the control target can be imaged as a subject and having different imaging directions in which the control target is imaged, and
the time management unit manages, for each of the plurality of imaging units, time information indicating the time lag between the control data collected by the data collection unit and the image collected by the image collection unit included in the imaging unit.

13. The control system according to claim 12, wherein for each of the imaging units, the image adjustment unit identifies, on a basis of the collection time associated with the control data corresponding to the user-designated point and the time lag indicated by the time information of the imaging unit, the frame image associated with the imaging time corresponding to the user-designated point from the plurality of frame images configuring an image captured by the imaging unit, and reproduces the frame image.

14. The control system according to any one of claims 11 to 13, wherein upon receipt of a user operation during reproduction by the image reproduction unit, the UI unit identifies a reproduction position in the plurality of frame images corresponding to a time point of the receipt, and stores information on a predetermined section starting from the identified reproduction position based on an amount of the user operation on the image with the information on the predetermined section associated with the image.

15. The control system according to claim 14, wherein when reproducing the image, the image adjustment unit adjusts a reproduction speed of the image on a basis of the information on the predetermined section associated with the image.
